# EUROPEAN PATENT SPECIFICATION

(11) **EP 3 193 463 B1**
(45) Date of publication and mention of the grant of the patent: **26.12.2018**
(21) Application number: 15839265.4
(22) Date of filing: 18.03.2015
(51) Int. Cl.: H04B 7/04, H04B 7/024, H04B 7/0452, H04L 5/00, H04W 72/12

(54) **USER PAIRING PROCESSING METHOD, DEVICE AND BASE STATION**
BENUTZERPAARUNGSVERARBEITUNGSVERFAHREN, VORRICHTUNG UND BASISSTATION
PROCÉDÉ DE TRAITEMENT D'APPARIEMENT D'UTILISATEUR, DISPOSITIF ET STATION DE BASE

(30) Priority: 10.09.2014 CN 201410458132
(43) Date of publication of application: 19.07.2017
(73) Proprietor: ZTE Corporation, Shenzhen, Guangdong 518057 (CN)
(72) Inventor: XU, Wanfu, Shenzhen Guangdong 518057 (CN); LI, Jun, Shenzhen Guangdong 518057 (CN); LU, Shaogui, Shenzhen Guangdong 518057 (CN); LONG, Zhijun, Shenzhen Guangdong 518057 (CN); LI, Gang, Shenzhen Guangdong 518057 (CN)
(74) Representative: Brunazzi, Stefano
(86) International application number: PCT/CN2015/074537
(87) International publication number: WO 2016/037477

(56) References cited:
- EP-A1- 2 317 809
- CN-A- 102 263 579
- CN-A- 102 761 353
- CN-A- 103 415 081
- CN-A- 103 731 923
- US-A1- 2011 044 272
- US-A1- 2012 120 864

## Description

### Technical Field

The disclosure relates to the field of communications, and in particular to a method and device for processing user pairing, and a base station.

### Background

Multiple User - Multiple Input Multiple Output (MU-MIMO) is a space diversity technology, capable of improving capacity and spectral efficiency of a communication system exponentially without increase of system bandwidths. An influence of multipath fading is reduced by using diversity, co-channel interference can be effectively eliminated, reliability of a channel is improved, bit error rate is reduced, and the MU-MIMO is a key technology adopted in a new-generation mobile communication system.

The MU-MIMO is a method and technology enabling multiple users to use the same time frequency resources and thus to improve system capacity. Since users of MU-MIMO need to spatially divide resources in time and frequency domains, if spatial orthogonality between the users spatially dividing the resources in the same time and frequency domains is not good, these users for space division seriously interfere with each other, so not only air interface capacity of a space division system cannot be improved, but also the bit error rate is increased, which cause that system capacity and user delay are influenced. Therefore, pairing selection for space division users becomes a key of research on an MU-MIMO system.

In the related art, a method for processing MU-MIMO user pairing is mainly divided into the following two classes. The first class includes that interference and correlation are calculated according to a Precoding Matrix Indicator (PMI) to process the MU-MIMO user pairing. Since a quantity of PMIs is limited by a port number of a Common Reference Signal (CRS) and a number of codebooks specified by a certain CRS port protocol is limited, a precoding matrix has a quantization error, that is, an error will exist between the precoding matrix and an actual channel matrix, which may cause error of calculated interference and inaccurate beam forming direction. The second class includes that singular value decomposition on a channel matrix is performed to calculate a null space. It is necessary to perform singular value decomposition on channel matrices of all users, and therefore when there are more space division users, calculated amount is large, and complexity is high. Moreover, after first paired users are selected by using this method, interference between the users is only considered without consideration of Channel Quality Indicators (CQIs) of other paired users, so this method is poor in capacity and complexity. Besides, due to introduction of a Massive MIMO technology, space division users are greatly increased, and an influence of quantization error and complexity are more obvious.

Therefore, problems of interference error, low pairing capacity and high complexity when user pairing is processed by using the MU-MIMO exist in the related art.

The U.S. Patent Application US 2012/0120864 discloses a wireless base station, in which a mode setting units sets one or more wireless terminals at a collaborative spatial multiplex mode.

The European Patent Application EP 2 317 809 A1 discloses a scheduling of up-link transmissions of a wireless communication system.

The Chinese Patent Application CN 103415081 discloses a resource scheduling method and base station.

### Summary

The scope of the claimed invention is defined by the subject-matter of the appended claims.

The embodiments of disclosure provide a method and device for processing user pairing, and a base station, so as at least to solve problems of interference error, low pairing capacity and high complexity when the user pairing is processed by using MU-MIMO in the related art.

In an embodiment of the disclosure, a method for processing user pairing is provided, which may include that: receiving a signal reported by a User Equipment (UE) for generating a channel matrix H; generating the channel matrix H of the UE according to the received signal; generating a space division information table for identifying correlation between UEs according to the generated channel matrix H; and determining paired users according to the generated space division information table.

In an example embodiment, generating the space division information table for identifying the correlation between UEs according to the generated channel matrix H includes: judging whether the correlation between each two UEs is smaller than a predetermined threshold; at least one of a case that determining, when the correlation between each two UEs is smaller than the predetermined threshold, that the UEs support pairing; and a case that determining, when the correlation between each two UEs is not smaller than the predetermined threshold, that the UEs do not support pairing, wherein the space division information table is used for identifying whether the UEs support pairing.

In an example embodiment, determining the paired users according to the generated space division information table includes: determining a quantity of UEs supporting to be paired with each UE; sorting each UE according to the quantity of the UEs supporting to be paired with each UE; and deleting at least one UE which does not support to be paired with each UE in accordance with a descending order of the quantity until the user pairing is completed.

In an example embodiment, sorting each UE according to the quantity of the UEs supporting to be paired with each UE includes: sorting, in case of the same quantity of the UEs supporting to be paired with each UE, the UEs according to user priorities of the UEs.

In an example embodiment, before determining the paired users according to the generated space division information table, the method further includes: determining at least one of the following information of the UE: Quality of Service (QoS) priority, Modulation Coding System (MCS) information, and Buffer Status Report (BSR) information, wherein at least one of the determined information of the UE and the space division information table are used for determining the paired users.

In another embodiment of the disclosure, a device for processing user pairing is provided, which may include: a receiving component, arranged to receive a signal reported by a User Equipment (UE) for generating a channel matrix H; a first generation component, arranged to generate the channel matrix H of the UE according to the received signal; a second generation component, arranged to generate a space division information table for identifying a correlation between UEs according to the generated channel matrix H; and a first determination component, arranged to determine paired users according to the generated space division information table.

In an example embodiment, the second generation component includes: a judgement element, arranged to judge whether the correlation between each two UEs is smaller than a predetermined threshold; at least one of a first determination element, arranged to determine, when the correlation between each two UEs is smaller than the predetermined threshold, that the UEs support pairing; and, a second determination element, arranged to determine, when the correlation between each two UEs is not smaller than the predetermined threshold, that the UEs do not support pairing, wherein the space division information table is used for identifying whether the UEs support pairing and do not support pairing.

In an example embodiment, the first determination component includes: a third determination element, arranged to determine the quantity of UEs supporting to be paired with each UE; a sorting element, arranged to sort the UEs according to a quantity of the UEs supporting to be paired with each UE; and a deletion element, arranged to delete at least one UE which does not support to be paired with each UE in accordance with a descending order of the quantity until the user pairing is completed.

In an example embodiment, the sorting element includes: a sorting sub-element, arranged to sort, in case of the same quantity of the UEs supporting to be paired with each UE, the UEs according to user priorities of the UEs.

In an example embodiment, the device further includes: a second determination component, arranged to determine at least one of the following information of the UE: Quality of Service (QoS) priority, Modulation Coding System (MCS) information, and Buffer Status Report (BSR) information, wherein at least one of the determined information of the UE and the space division information table are used for determining the paired users.

In another embodiment of the disclosure, a base station is provided, which may include the above-mentioned device for processing user pairing.

By means of the disclosure, a signal reported by a UE for generating a channel matrix H is received; the channel matrix H of the UE is generated according to the received signal; a space division information table for identifying correlation between UEs is generated according to the generated channel matrix H; and paired users are determined according to the generated space division information table. The problems of interference error, low pairing capacity and high complexity when the user pairing is performed by using MU-MIMO in the related art are solved, thereby simplifying the user pairing and improving MU-MIMO system capacity.

### Brief Description of the Drawings

The drawings described herein are intended to provide further understanding of the disclosure, and form a part of the present application. The schematic embodiments and descriptions of the disclosure are intended to explain the disclosure, and do not form improper limits to the disclosure. In the drawings:
Fig. 1 is a flowchart of a method for processing user pairing according to an embodiment of the disclosure;
Fig. 2 is a structural block diagram of a device for processing user pairing according to an embodiment of the disclosure;
Fig. 3 is a structural block diagram of a second generation component 26 in a device for processing user pairing according to an example embodiment of the disclosure;
Fig. 4 is a structural block diagram of a first determination component 28 in a device for processing user pairing according to an example embodiment of the disclosure;
Fig. 5 is a structural block diagram of a sorting element 44 in a first determination component 28 in a device for processing user pairing according to an example embodiment of the disclosure;
Fig. 6 is a structural block diagram of a device for processing user pairing according to an example embodiment of the disclosure;
Fig. 7 is a structural block diagram of a base station according to an embodiment of the disclosure;
Fig. 8 is a flowchart of a method for multi-user pairing in a wireless communication system according to an embodiment of the disclosure;
Fig. 9 is a structural block diagram of a device for multi-user pairing in a wireless communication system according to an embodiment of the disclosure; and
Fig. 10 is a flowchart of multi-user pairing in a wireless communication system according to an example embodiment of the disclosure.

### Detailed Description

The disclosure will be described in detail below with reference to the drawings and the embodiments. It needs to be noted that the embodiments in the present application and the characteristics in the embodiments may be combined without conflicts.

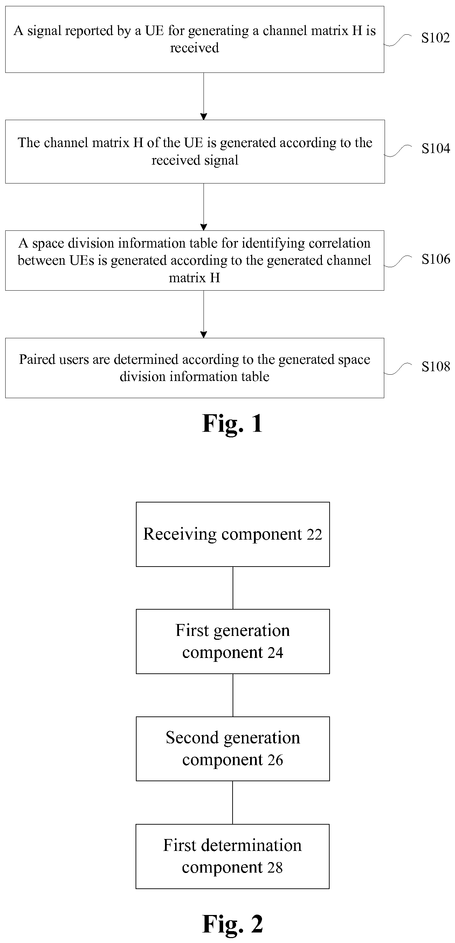

A method for processing user pairing is provided in an embodiment. Fig. 1 is a flowchart of a method for processing user pairing according to an embodiment of the disclosure. As shown in Fig. 1, the flow includes the following steps.

Step S102: A signal reported by a UE for generating a channel matrix H is received. For example, the signal may be at least one of a signal such as a Sounding Reference Signal (SRS) and a PMI.

Step S104: The channel matrix H of the UE is generated according to the received signal.

Step S106: A space division information table for identifying correlation between UEs is generated according to the generated channel matrix H.

Step S108: Paired users are determined according to the generated space division information table.

By means of the above-mentioned steps, the space division information table for identifying the correlation between UEs is acquired via the channel matrix H generated according to the received SRS; and the paired users are determined according to the generated space division information table. By means of the above-mentioned processing, the problems of interference error, low pairing capacity and high complexity when the user pairing is performed by using MU-MIMO in the related art are solved, thereby simplifying the user pairing and improving MU-MIMO system capacity.

Moreover, when the channel matrix H of the UE is generated according to the received signal such as at least one of the SRS and the PMI, different processing modes may be adopted according to different antennae supported by the UE. For example, a UE antenna may be taken as H, and when the UE supports alternate sending of the SRS via antennae, a channel matrix of one of the antennae is randomly selected. When the UE does not support alternate sending of the SRS via antennae, a channel matrix is the channel matrix H of the antenna, H=SRSreceiving/SRSsending, where SRSreceiving is an SRS of a receiving end, and SRSsending is an SRS of a sending end.

Before a correlation weight is calculated, the channel matrix H may be normalized firstly, and a coefficient of correlation between UEs is obtained via Cov=Hᵢ'*Hⱼ, in which Hᵢ and Hⱼ are respectively normalization channel matrices of UEi and UEj. Then, when the space division information table for identifying the correlation between the UEs is generated according to the generated channel matrix H, multiple processing modes may be adopted. For example, it may be judged whether the correlation between each two UEs is smaller than a predetermined threshold; when the correlation between each two UEs is smaller than a predetermined threshold, it is determined that the UEs support pairing; and, the correlation between each two UEs is not smaller than the predetermined threshold, it is determined that the UEs do not support pairing, in which the space division information table is used for identifying whether the UEs support pairing. That is, when the correlation is determined, an identifier is adopted to perform identification, and when non-correlation is determined, another identifier is adopted to perform identification.

When the paired users are determined according to the generated space division information table, multiple processing modes may also be adopted. For example, the following example processing mode may be adopted. A quantity of UEs supporting to be paired with each UE is determined; the UEs are sorted according to the quantity of the UEs supporting to be paired with each UE; and UEs which do not support to be paired with each UE are deleted in accordance with a descending order of the quantity until the user pairing is completed. By means of such processing, more users are spatially divided as far as possible, so as to improve system capacity of MU-MIMO.

It needs to be noted that when the UEs are sorted according to the quantity of the UEs supporting to be paired with each UE, a condition of the same quantity of the UEs supporting to be paired with each UE probably exists, and under this condition, the UEs may be sorted according to user priorities of the UEs.

In an example embodiment, before the paired users are determined according to the generated space division information table, during processing the user pairing, in order to consider factors, probably involved, as comprehensively as possible, for example, in order to comprehensively consider each pairing factor, at least one of the following information of the UE may be determined: QoS priority, MCS information, and BSR information so that the paired users can be determined according to at least one of the determined information of the UE and the space division information table.

A device for processing user pairing is also provided in another embodiment. The device is arranged to implement the above-mentioned embodiment and an example implementation mode. Those which have been illustrated will not be elaborated herein. Just as a term 'component' used below, the combination of software and/or hardware with predetermined functions may be implemented. Although the device described by the following embodiment is better implemented by software, the implementation of hardware or the combination of software and hardware may be possible and conceived.

Fig. 2 is a structural block diagram of a device for processing user pairing according to an embodiment of the disclosure. As shown in Fig. 2, the device includes a receiving component 22, a first generation component 24, a second generation component 26 and a first determination component 28. The device will be described below.

The receiving component 22 is arranged to receive a signal reported by a UE for generating a channel matrix H; the first generation component 24 is connected with the receiving component 22 and arranged to generate the channel matrix H of the UE according to the received signal; the second generation component 26 is connected with the first generation component 24 and arranged to generate a space division information table for identifying a correlation between UEs according to the generated channel matrix H; and the first determination component 28 is connected with the second generation component 26 and arranged to determine paired users according to the generated space division information table.

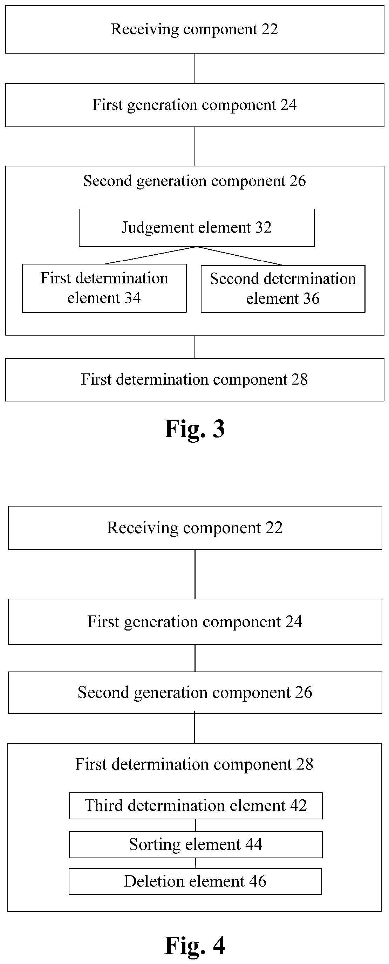

Fig. 3 is a structural block diagram of a second generation component 26 in a device for processing user pairing according to an example embodiment of the disclosure. As shown in Fig. 3, the second generation component 26 includes a judgement element 32, at least one of a first determination element 34 and a second determination element 36. The second generation component 26 will be described below.

The judgement element 32 is arranged to judge whether the correlation between each two UEs is smaller than a predetermined threshold; the first determination element 34 is connected with the judgement element 32 and arranged to determine, when the correlation between each two UEs is smaller than the predetermined threshold, that the UEs support pairing; the second determination element 36 is connected with the judgement element 32 and arranged to determine, when the correlation between each two UEs is not smaller than the predetermined threshold, that the UEs do not support pairing, moreover, the space division information table is used for identifying whether the UEs support pairing.

Fig. 4 is a structural block diagram of a first determination component 28 in a device for processing user pairing according to an example embodiment of the disclosure. As shown in Fig. 4, the first determination component 28 includes: a third determination element 42, a sorting element 44 and a deletion element 46. The first determination component 28 will be described below.

The third determination element 42 is arranged to determine a quantity of UEs supporting to be paired with each UE; the sorting element 44 is connected with the third determination element 42 and arranged to sort the UEs according to the quantity of the UEs supporting to be paired with each UE; and the deletion element 46 is connected with the sorting element 44 and arranged to delete at least one of UE which does not support to be paired with each UE in accordance with a descending order of the quantity until the user pairing is completed.

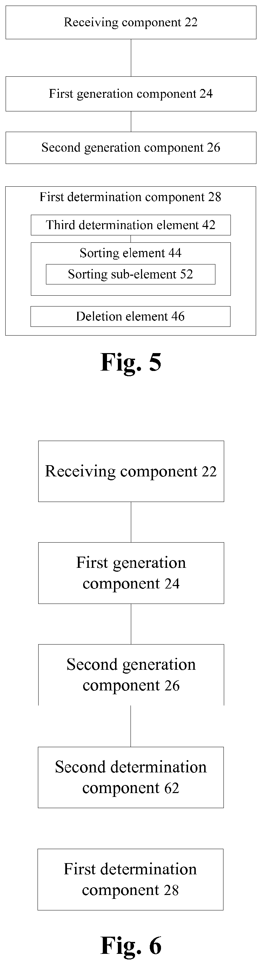

Fig. 5 is a structural block diagram of a sorting element 44 in a first determination component 28 in a device for processing user pairing according to an example embodiment of the disclosure. As shown in Fig. 5, the sorting element 44 includes: a sorting sub-element 52. The sorting sub-element 52 will be described below.

The sorting sub-element 52 is arranged to sort, in case of the same quantity of the UEs supporting to be paired with each UE, the UEs according to user priorities of the UEs.

Fig. 6 is a structural block diagram of a device for processing user pairing according to an example embodiment of the disclosure. As shown in Fig. 6, the device includes a second determination component 62. The second determination component 62 will be described below.

The second determination component 62 is connected with the second generation component 26 and the first determination component 28, and arranged to determine at least one of the following information of the UE: QoS priority, MCS information and BSR information, moreover at least one of the determined information of the UE and the space division information table are used for determining the paired users.

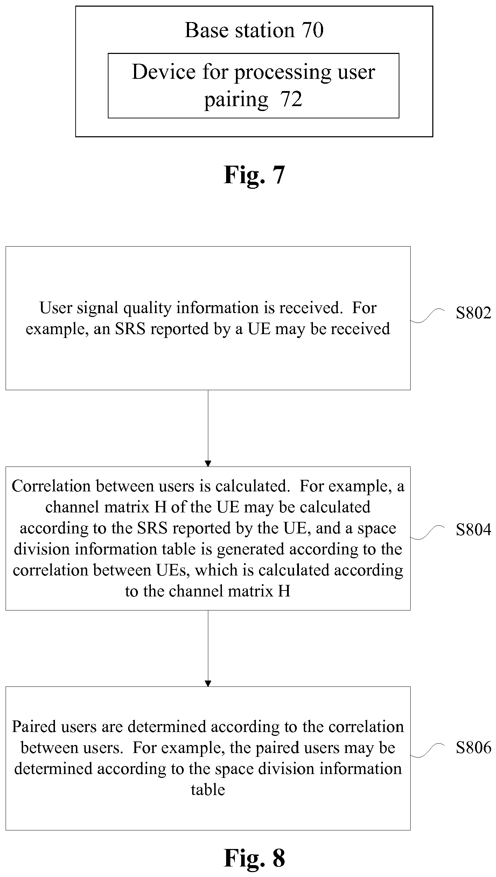

Fig. 7 is a structural block diagram of a base station according to an embodiment of the disclosure. As shown in Fig. 7, the base station 70 includes the above-mentioned device for processing user pairing 72.

When the user pairing is processed by using MU-MIMO on a basis of the related art, the problems of short establishment time and retention time of a trigger are caused during pairing via two classes of modes adopted in the related art. In the present embodiment, a method for multi-user pairing in a wireless communication system is provided.

Fig. 8 is a flowchart of a method for multi-user pairing in a wireless communication system according to an embodiment of the disclosure. As shown in Fig. 8, the flow includes the following steps.

Step S802: User signal quality information is received. For example, an SRS reported by a UE may be received.

Step S804: Correlation between users is calculated. For example, a channel matrix H of the UE may be calculated according to the SRS reported by the UE, and a space division information table is generated according to the correlation between UEs, which is calculated according to the channel matrix H.

Step S806: Paired users are determined according to the correlation between users. For example, the paired users may be determined according to the space division information table. Furthermore, when the paired users are determined according to the space division information table, multiple modes may be adopted. For example, the quantity of UEs satisfying correlation conditions with each UE may be determined according to the space division information table. Then, the UEs are re-sorted according to the quantity of the UEs satisfying the correlation conditions; and by taking a UE having the highest priority after sorting as a root node, all UEs are traversed, and UEs which do not meet correlation requirements with the root node in the space division information table are gradually deleted until pairing is completed.

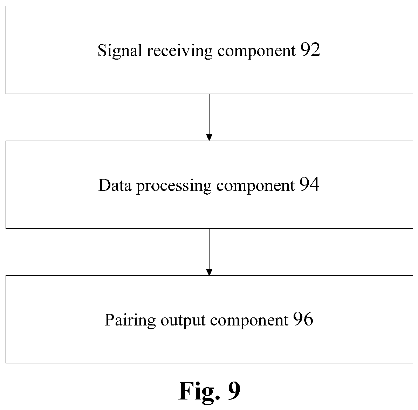

On the basis of the above-mentioned method, in the present embodiment, a device for multi-user pairing in a wireless communication system is also provided. Fig. 9 is a structural block diagram of a device for multi-user pairing in a wireless communication system according to the disclosure. As shown in Fig. 9, the device includes a signal receiving component 92 (identical to the receiving component 22 structurally), a data processing component 94 (identical to the first generation component 24 and the second generation component 26 structurally), and a pairing output component 96 (identical to the first determination component 28 structurally). The structure will be described below.

The signal receiving component 92 is arranged to receive an SRS reported by a user; the data processing component 94 is arranged to calculate correlation between users according to the SRS reported by the user; and the pairing output component 96 is arranged to determine paired users according to the correlation between the users.

Compared with an MU-MIMO pairing technology in the related art, a QoS priority of the UE is considered before pairing, and meanwhile, UEs to be paired are sorted according to the correlation between each two UEs meeting requirements, so more users can be spatially divided as far as possible, so as to improve the system capacity of MU-MIMO as far as possible.

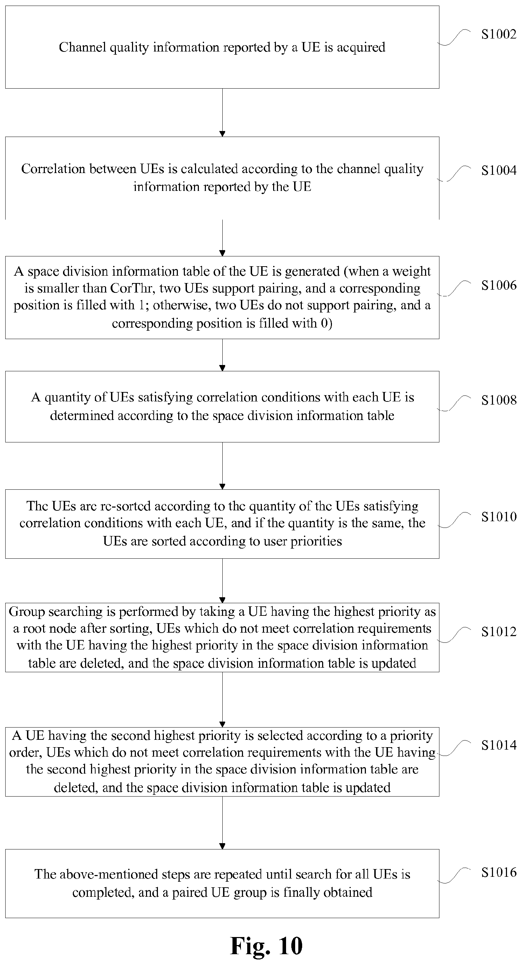

Fig. 10 is a flowchart of multi-user pairing in a wireless communication system according to an example embodiment of the disclosure. As shown in Fig. 10, the flow includes the following steps.

Step S1002: Channel quality information reported by a UE is acquired.

Step S1004: Correlation between UEs is calculated according to the channel quality information reported by the UE.

Step S1006: A space division information table of the UE is generated (when a weight is smaller than CorThr, two UEs support pairing, and a corresponding position is filled with 1; otherwise, two UEs do not support pairing, and a corresponding position is filled with 0).

Step S1008: A quantity of UEs satisfying correlation conditions with each UE is determined according to the space division information table.

Step S1010: The UEs are re-sorted according to the quantity of the UEs satisfying correlation conditions with each UE, and if the quantity is the same, the UEs are sorted according to user priorities.

Step S1012: Group searching is performed by taking a UE having the highest priority as a root node after sorting, UEs which do not meet correlation requirements with the UE having the highest priority in the space division information table are deleted, and the space division information table is updated.

Step S1014: A UE having the second highest priority is selected according to a priority order, UEs which do not meet correlation requirements with the UE having the second highest priority in the space division information table are deleted, and the space division information table is updated.

Step S1016: The above-mentioned steps are repeated until search for all UEs is completed, and a paired UE group is finally obtained.

Obviously, those skilled in the art shall understand that all of the above-mentioned components or steps in the disclosure may be implemented by using a general calculation device, may be centralized on a single calculation device or may be distributed on a network composed of multiple calculation devices. Alternatively, they may be implemented by using executable program codes of the calculation devices. Thus, they may be stored in a storage device and executed by the calculation devices, the shown or described steps may be executed in a sequence different from the sequence under certain conditions, or they are manufactured into each integrated circuit component respectively, or multiple components or steps therein are manufactured into a single integrated circuit component. Thus, the disclosure is not limited to combination of any specific hardware and software.

The above is only the example embodiments of the disclosure, and not intended to limit the disclosure. There may be various modifications and variations in the disclosure for those skilled in the art. Any modifications, equivalent replacements, improvements and the like made within the disclosure shall fall within the scope of protection of the disclosure.

### Industrial Applicability

By means of the above-mentioned embodiments and example implementation modes, the problems of interference error, low pairing capacity and high complexity when user pairing is processed by using MU-MIMO in the related art are solved, thereby simplifying the user pairing and improving MU-MIMO system capacity.

## Claims

1. A method for processing user pairing, comprising:
receiving a signal reported by a User Equipment, UE, for generating a channel matrix H (S102);
generating the channel matrix H of the UE according to the received signal (S104);
generating a space division information table for identifying correlation between UEs according to the generated channel matrix H (S106); and
determining paired users according to the generated space division information table (S108);
wherein generating the space division information table for identifying the correlation between UEs according to the generated channel matrix H (S106) comprises:
judging whether the correlation between each two UEs is smaller than a predetermined threshold;
at least one of a case that determining, when the correlation between each two UEs is smaller than the predetermined threshold, that the UEs support pairing; and a case that determining, when the correlation between each two UEs is not smaller than the predetermined threshold, that the UEs do not support pairing, wherein the space division information table is used for identifying whether the UEs support pairing;
and wherein determining the paired users according to the generated space division information table (108) comprises:
determining a quantity of UEs supporting to be paired with each UE;
sorting each UE according to the quantity of the UEs supporting to be paired with each UE; and
deleting at least one UE which does not support to be paired with each UE in accordance with a descending order of the quantity until the user pairing is completed.

2. The method as claimed in claim 1, wherein sorting each UE according to the quantity of the UEs supporting to be paired with each UE comprises:
sorting, in case of the same quantity of the UEs supporting to be paired with each UE, the UEs according to user priorities of the UEs.

3. The method as claimed in any one of claims 1 to 2, wherein before determining the paired users according to the generated space division information table, the method further comprises:
determining at least one of the following information of the UE: Quality of Service, QoS, priority, Modulation Coding System, MCS, information, and Buffer Status Report. BSR, information, wherein at least one of the determined information of the UE and the space division information table are used for determining the paired users.

4. A device for processing user pairing, comprising:
a receiving component (22), arranged to receive a signal reported by a User Equipment, UE, for generating a channel matrix H;
a first generation component (24), arranged to generate the channel matrix H of the UE according to the received signal;
a second generation component (26), arranged to generate a space division information table for identifying a correlation between UEs according to the generated channel matrix H; and
a first determination component (28), arranged to determine paired users according to the generated space division information table;
wherein the second generation component (26) comprises:
a judgement element (32), arranged to judge whether the correlation between each two UEs is smaller than a predetermined threshold;
at least one of a first determination element (34), arranged to determine, when the correlation between each two UEs is smaller than the predetermined threshold, that the UEs support pairing; and, a second determination element (36), arranged to determine, when the correlation between each two UEs is not smaller than the predetermined threshold, that the UEs do not support pairing, wherein the space division information table is used for identifying whether the UEs support pairing;
and wherein the first determination component (28) comprises:
a third determination element (42), arranged to determine a quantity of UEs supporting to be paired with each UE;
a sorting element (44), arranged to sort the UEs according to the quantity of the UEs supporting to be paired with each UE; and
a deletion element (46), arranged to delete at least one UE which does not support to be paired with each UE in accordance with a descending order of the quantity until the user pairing is completed.

5. The device as claimed in claim 4, wherein the sorting element (44) comprises:
a sorting sub-element (52), arranged to sort, in case of the same quantity of the UEs supporting to be paired with each UE, the UEs according to user priorities of the UEs.

6. The device as claimed in any one of claims 4 to 5, further comprising:
a second determination component (62), arranged to determine at least one of the following information of the UE: Quality of Service, QoS, priority, Modulation Coding System, MCS, information, and Buffer Status Report, BSR, information, wherein at least one of the determined information of the UE and the space division information table are used for determining the paired users.

7. A base station, comprising the device as claimed in any one of claims 4 to 6.

## Patentansprüche

1. Verfahren zum Verarbeiten von Benutzerpairing, umfassend:
Empfangen eines durch ein Benutzerendgerät, UE, gemeldeten Signals zum Erzeugen einer Kanalmatrix H (S102);
Erzeugen der Kanalmatrix H des UE gemäß dem empfangenen Signal (S104);
Erzeugen einer Raumteilungsinformationentabelle zum Identifizieren der Korrelation zwischen UE gemäß der erzeugten Kanalmatrix H (S106); und
Bestimmen gepaarter Benutzer gemäß der erzeugten Raumteilungsinformationentabelle (S108);
wobei das Erzeugen der Raumteilungsinformationentabelle zum Identifizieren der Korrelation zwischen UE gemäß der erzeugten Kanalmatrix H (S106) Folgendes umfasst:
Beurteilen, ob die Korrelation zwischen jeweils zwei UE kleiner als ein vorbestimmter Schwellenwert ist;
mindestens einen von einem Fall, dass bestimmt wird, dass, wenn die Korrelation zwischen jeweils zwei UE kleiner als der vorbestimmte Schwellenwert ist, die UE Pairing unterstützen; und einem Fall, dass bestimmt wird, dass, wenn die Korrelation zwischen jeweils zwei UE nicht kleiner als der vorbestimmte Schwellenwert ist, die UE Pairing nicht unterstützen, wobei die Raumteilungsinformationentabelle verwendet wird, um zu identifizieren, ob die UE Pairing unterstützen;
und wobei das Bestimmen der gepaarten Benutzer gemäß der erzeugten Raumteilungsinformationentabelle (108) Folgendes umfasst:
Bestimmen einer Anzahl von UE, die unterstützen, mit jedem UE gepaart werden soll;
Sortieren jedes UE gemäß der Anzahl der UE, die mit jedem UE gepaart werden soll; und
Löschen mindestens eines UE, das nicht unterstützt, mit jedem UE gepaart zu werden, gemäß der Anzahl in absteigender Reihenfolge, bis das Benutzerpairing abgeschlossen ist.

2. Verfahren nach Anspruch 1, wobei das Sortieren jedes UE gemäß der Anzahl der UE, die unterstützen, mit jedem UE gepaart zu werden, Folgendes umfasst:
im Falle der gleichen Anzahl der UE, die unterstützen, mit jedem UE gepaart zu werden, Sortieren der UE gemäß Benutzerprioritäten der UE.

3. Verfahren nach einem der Ansprüche 1 bis 2, wobei das Verfahren vor dem Bestimmen der gepaarten Benutzer gemäß der erzeugten Raumteilungsinformationentabelle ferner Folgendes umfasst:
Bestimmen mindestens eine der folgenden Informationen des UE: Dienstqualität, QoS, Priorität, Informationen zum Modulationskodierungssystem, MCS, und Informationen zur Pufferstatusmeldung, BSR, wobei mindestens eine von den bestimmten Informationen des UE und der Raumteilungsinformationentabelle zum Bestimmen der gepaarten Benutzer verwendet wird.

4. Vorrichtung zur Verarbeitung von Benutzerpairing, umfassend:
eine Empfangskomponente (22), die angeordnet ist, ein durch ein Benutzerendgerät, UE, gemeldetes Signal zum Erzeugen einer Kanalmatrix H zu empfangen;
eine erste Erzeugungskomponente (24), die angeordnet ist, die Kanalmatrix H des UE gemäß dem empfangenen Signal zu erzeugen;
eine zweite Erzeugungskomponente (26), die angeordnet ist, eine Raumteilungsinformationentabelle zum Identifizieren einer Korrelation zwischen UE gemäß der erzeugten Kanalmatrix H zu erzeugen; und
eine erste Bestimmungskomponente (28), die angeordnet ist, gepaarte Benutzer gemäß der erzeugten Raumteilungsinformationentabelle zu bestimmen;
wobei die zweite Erzeugungskomponente (26) Folgendes umfasst:
ein Beurteilungselement (32), das angeordnet ist, zu beurteilen, ob die Korrelation zwischen jeweils zwei UE kleiner als ein vorbestimmter Schwellenwert ist;
mindestens eines von einem ersten Bestimmungselement (34), das angeordnet ist, zu bestimmen, dass, wenn die Korrelation zwischen jeweils zwei UE kleiner als der vorbestimmte Schwellenwert ist, die UE Pairing unterstützen; und einem zweiten Bestimmungselement (36), das angeordnet ist, zu bestimmen, dass, wenn die Korrelation zwischen jeweils zwei UE nicht kleiner als der vorbestimmte Schwellenwert ist, die UE Pairing nicht unterstützen, wobei die Raumteilungsinformationentabelle verwendet wird, um zu identifizieren, ob die UE Pairing unterstützen;
und wobei die erste Bestimmungskomponente (28) Folgendes umfasst:
ein drittes Bestimmungselement (42), das angeordnet ist, eine Anzahl von UE zu bestimmen, die unterstützen, mit jedem UE gepaart zu werden;
ein Sortierelement (44), das angeordnet ist, die UE gemäß der Anzahl der UE zu sortieren, die unterstützen, mit jedem UE gepaart zu werden; und
ein Löschelement (46), das angeordnet ist, mindestens ein UE, das nicht unterstützt, mit jedem UE gepaart zu werden, gemäß der Anzahl in absteigender Reihenfolge zu löschen, bis das Benutzerpairing abgeschlossen ist.

5. Vorrichtung nach Anspruch 4, wobei das Sortierelement (44) Folgendes umfasst:
ein Sortierteilelement (52), das angeordnet ist, im Fall der gleichen Anzahl der UE, die unterstützen, mit jedem UE gepaart zu werden, die UE gemäß Benutzerprioritäten der UE zu sortieren.

6. Verfahren nach einem der Ansprüche 4 bis 5, ferner umfassend:
eine zweite Bestimmungskomponente (62), die angeordnet ist, mindestens eine der folgenden Informationen des UE zu bestimmen: Dienstqualität, QoS, Priorität, Informationen zum Modulationskodierungssystem, MCS, und Informationen zur Pufferstatusmeldung, BSR, wobei mindestens eine von den bestimmten Informationen des UE und der Raumteilungsinformationentabelle zum Bestimmen der gepaarten Benutzer verwendet wird.

7. Basisstation, umfassend die Vorrichtung nach einem der Ansprüche 4 bis 6.

## Revendications

1. Procédé de traitement d'appariement d'utilisateur, consistant à :
recevoir un signal rapporté par un équipement utilisateur (UE) afin de produire une matrice de canal H (S 102) ;
produire la matrice de canal H de l'UE en fonction du signal reçu (S104);
produire une table d'informations de division d'espace afin d'identifier une corrélation entre des UE en fonction de la matrice de canal H produite (S 106) ; et
déterminer des utilisateurs appariés en fonction de la table d'informations de division d'espace produite (S 108) ;
dans lequel la production de la table d'informations de division d'espace pour identifier la corrélation entre des UE selon la matrice de canal H produite (S 106) consiste à :
évaluer si la corrélation entre chaque paire d'UE est inférieure à un seuil prédéfini ;
au moins un cas parmi la détermination, lorsque la corrélation entre chaque paire d'UE est inférieure au seuil prédéfini, que les UE prennent en charge l'appariement ; et un cas de détermination, lorsque la corrélation entre chaque paire d'UE n'est pas inférieure au seuil prédéfini, que les UE ne prennent pas en charge l'appariement, dans lequel la table d'informations de division d'espace est utilisée pour identifier si les UE prennent en charge l'appariement ;
et dans lequel la détermination des utilisateurs appariés en fonction de la table d'informations de division d'espace produite (108) consiste à :
déterminer une quantité d'UE prenant en charge l'appariement avec chaque UE ;
trier chaque UE en fonction de la quantité d'UE prenant en charge l'appariement avec chaque UE ; et
supprimer au moins un UE qui ne prend pas en charge l'appariement avec chaque UE conformément à un ordre décroissant de la quantité jusqu'à la fin de l'appariement d'utilisateurs.

2. Procédé selon la revendication 1, dans lequel trier chaque UE en fonction de la quantité d'UE prenant en charge l'appariement avec chaque UE consiste à :
trier, dans le cas où la même quantité d'UE prend en charge l'appariement avec chaque UE, les UE en fonction des priorités d'utilisateur des UE.

3. Procédé selon l'une quelconque des revendications 1 à 2, dans lequel, avant de déterminer les utilisateurs appariés en fonction de la table d'informations de division d'espace produite, le procédé consiste en outre à :
déterminer au moins une des informations suivantes de l'UE : priorité de qualité de service (QoS), informations sur le système de codage de modulation (MCS) et informations sur le rapport d'état de la mémoire tampon (BSR), dans lequel au moins un élément parmi les informations déterminées de l'UE et la table d'informations de division d'espace est utilisé pour déterminer les utilisateurs appariés.

4. Dispositif de traitement d'appariement d'utilisateur, comprenant :
un composant de réception (22), conçu pour recevoir un signal rapporté par un équipement utilisateur (UE) afin de produire une matrice de canal H ;
un premier composant de production (24), conçu pour produire la matrice de canal H de l'UE selon le signal reçu ;
un deuxième composant de production (26), conçu pour produire une table d'informations de division d'espace pour identifier une corrélation entre les UE selon la matrice de canal H produite ; et
un premier composant de détermination (28), conçu pour déterminer des utilisateurs appariés en fonction de la table d'informations de division d'espace produite ;
dans lequel le deuxième composant de génération (26) comprend :
un élément d'évaluation (32), conçu pour évaluer si la corrélation entre chaque paire d'UE est inférieure à un seuil prédéfini ;
au moins un élément parmi un premier élément de détermination (34), conçu pour déterminer, lorsque la corrélation entre chaque paire d'UE est inférieure au seuil prédéfini, que les UE prennent en charge l'appariement ; et un deuxième élément de détermination (36), conçu pour déterminer, lorsque la corrélation entre chaque paire d'UE n'est pas inférieure au seuil prédéfini, que les UE ne prennent pas en charge l'appariement, dans lequel la table d'informations de division d'espace est utilisée pour identifier si les UE prennent en charge l'appariement ;
et dans lequel le premier composant de détermination (28) comprend :
un troisième élément de détermination (42), disposé pour déterminer une quantité d'UE prenant en charge l'appariement avec chaque UE ;
un élément de tri (44), conçu pour trier les UE en fonction de la quantité d'UE prenant en charge l'appariement avec chaque UE ; et
un élément de suppression (46), disposé pour supprimer au moins un UE qui ne prend pas en charge l'appariement avec chaque UE conformément à un ordre décroissant de la quantité jusqu'à la fin de l'appariement d'utilisateurs.

5. Dispositif selon la revendication 4, dans lequel l'élément de tri (44) comprend :
un sous-élément de tri (52), disposé pour trier, dans le cas où la même quantité d'UE prend en charge l'appariement avec chaque UE, les UE en fonction de priorités d'utilisateur des UE.

6. Dispositif selon l'une quelconque des revendications 4 à 5, comprenant en outre :
un deuxième composant de détermination (62), disposé pour déterminer au moins l'une des informations suivantes de l'UE : priorité de qualité de service (QoS), informations sur le système de codage de modulation (MCS) et informations sur le rapport d'état de la mémoire tampon (BSR), dans lequel au moins un élément parmi les informations déterminées de l'UE et la table d'informations de division d'espace est utilisé pour déterminer les utilisateurs appariés.

7. Station de base comprenant le dispositif selon l'une quelconque des revendications 4 à 6.
